# EUROPEAN PATENT SPECIFICATION

(11) **EP 2 090 841 B1**
(45) Date of publication and mention of the grant of the patent: **13.09.2017**
(21) Application number: 07720716.5
(22) Date of filing: 09.04.2007
(51) Int. Cl.: F24F 3/16

(54) **AN AIR PURIFIER WITH CO2 SENSOR**
LUFTREINIGER MIT CO2-SENSOR
PURIFICATEUR D'AIR AVEC DÉTECTEUR DE CO2

(30) Priority: 04.12.2006 CN 200620053025 U
(43) Date of publication of application: 19.08.2009
(73) Proprietor: Zhang, Yue, Changsha Hunan 410138 (CN)
(72) Inventor: Zhang, Yue, Changsha Hunan 410138 (CN)
(74) Representative: Korga, Leokadia
(86) International application number: PCT/CN2007/001143
(87) International publication number: WO 2008/067699

(56) References cited:
- EP-A- 0 403 230
- EP-A- 1 515 097
- EP-A- 1 666 152
- CN-Y- 2 393 012
- CN-Y- 2 612 444
- DE-A1- 19 715 144
- GB-A- 2 036 951
- US-A- 5 462 485

## Description

### FIELD OF THE INVENTION

The invention relates to an air purifier and more particularly to an air purifier with a CO2 sensor.

### BACKGROUND OF THE INVENTION

Conventional air purifiers offer only such basic functions as filtering of air and removing of bacteria, and cannot measure the carbon dioxide content in the air. In case that indoor air is polluted and the CO2 content exceeds a standard value, human health is severely harmed. EP 0403230 A discloses an air cleanser that includes a body having an air inlet and an air outlet, a fan, and an electrostatic precipitator cell. The air cleanser of EP 0403230 A does not include a CO₂ sensor. DE 19715144 A1 discloses a ventilating device that includes a CO₂ sensor for detecting the concentration of CO₂ of indoor air and alerting occupants of a degraded air quality. The ventilating device in DE 19715144 A1 does not include an electrostatic precipitator.

### SUAMMARY OF THE INVENTION

In view of the above-described problems, it is one objective of the invention to provide an air purifier with a CO2 sensor capable of measuring and controlling the CO2 content of the air, showing the content of CO2 to users, and sounding an alarm when the content exceeds a normal value so as to protect peoples' health.

To achieve the above objectives, in accordance with one embodiment of the invention, provided is an air purifier, comprising: a body having an air inlet and an air outlet, a blower, an electric control box, an electrostatic absorption device and a CO2 sensor. The blower is disposed in the air outlet of the body. The electrostatic absorption device is disposed in the air inlet of the body.

The CO₂ sensor is disposed in the air outlet of the body.

The electrostatic absorption device comprises a plurality of high voltage ionization wires and dust-collecting plates disposed alternately.

The CO₂ sensor is connected to the electric control box and sends obtained data to a control system.

The body of the air purifier employs a portable structure, a handle is disposed on the top of the body and a support foot is disposed at the bottom of the body.

The electrostatic absorption device is disposed in the air inlet while the CO₂ sensor is disposed in the air outlet of the air purifier.

Advantages of the invention comprise: removing dust particles, killing bacteria in the air, measuring the carbon dioxide content in the air and reminding people of supplying fresh air so as to prevent human health.

### BRIEF DESCRIPTION OF THE DRAWINGS

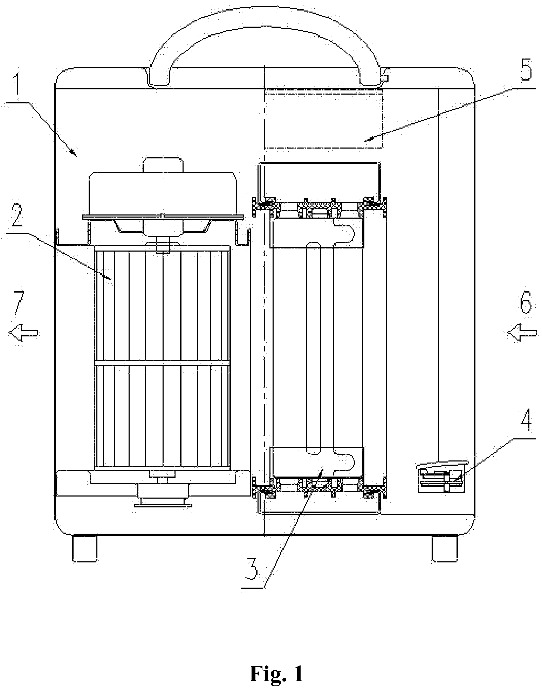

FIG. 1 is a schematic diagram of an air purifier with a CO₂ sensor in accordance with one embodiment of the invention.

References: 1. body; 2. blower; 3. electrostatic absorption device; 4. CO₂ sensor; 5. electric control box; 6. air inlet; 7. air outlet.

### DETAILED DESCRIPTION OF THE EMBODIMENTS

As shown in FIG. 1, an air purifier of the invention comprises: a body 1, a blower 2, an electrostatic absorption device 3, a CO₂ sensor 4 and an electric control box 5. The body 1 has an air inlet 6 and an air outlet 7. The electrostatic absorption device 3 is disposed in the air inlet 6. The blower 2 is disposed in the air outlet 7. The CO₂ sensor 4 measures carbon dioxide content in the air and sends obtained data to the electric control box 5. The electric control box 5 displays the carbon dioxide content. When the carbon dioxide content exceeds a preset value, an alarm is sent to alert the users to supply fresh air.

The body of the air purifier employs a portable structure, a handle is disposed on the top of the body and a support foot is disposed at the bottom of the body.

This invention is not to be limited to the specific embodiments disclosed herein and modifications for various applications and other embodiments are intended to be included within the scope of the appended claims.

## Claims

1. An air purifier comprising:
a) a body (1) having an air inlet (6) and an air outlet (7);
b) a blower (2);
c) an electric control box (5);
d) an electrostatic absorption device (3);
wherein:
the blower (2) is disposed in the air outlet (7) and the electrostatic absorption device is disposed in the air inlet (6);
**characterized in that**
the air purifier further comprises a CO2 sensor and the CO2 sensor (4) is disposed in the air outlet (7).

2. The air purifier according to any preceding claims, **characterized in that** the CO₂ sensor (4) is connected to the electric control box (5).

3. The air purifier according to any preceding claims, **characterized in that** the electrostatic absorption device (3) comprises a plurality of high voltage ionization wires and dust-collecting plates disposed alternately.

4. The air purifier according to any preceding claims, **characterized in that** the body (1) employs a portable structure.

5. The air purifier according to any preceding claims, **characterized in that** it allows the CO₂ concentration to be measured at the same time as air is being circulated by the blower (2) and purified by the electrostatic absorption device (3) so as to obtain a more accurate reading of the CO₂ concentration.

## Patentansprüche

1. Luftreiniger, umfassend:
a) einen Körper (1) mit einem Lufteinlass (6) und einem Luftauslass (7);
b) ein Gebläse (2);
c) einen elektrischen Schaltkasten (5);
d) eine elektrostatische Absorptionsvorrichtung (3);
worin:
das Gebläse (2) im Luftauslass (7) angeordnet ist und die elektrostatische Absorptionseinrichtung im Lufteinlass (6) angeordnet ist;
**dadurch gekennzeichnet, dass**
der Luftreiniger ferner einen CO₂ -Sensor umfasst und der CO₂ -Sensor (4) in dem Luftauslass (7) angeordnet ist.

2. Luftreiniger nach einem der vorhergehenden Ansprüchen, **dadurch gekennzeichnet, dass** der CO₂ -Sensor (4) mit dem elektrischen Schaltkasten verbunden ist (5).

3. Luftreiniger nach einem der vorhergehenden Ansprüchen, **dadurch gekennzeichnet, dass** die elektrostatische Absorptionsvorrichtung (3) eine Vielzahl von Hochspannungsdrähten und Ionisationsdrähten und staubbindenden Platten umfasst, die abwechselnd angeordnet sind.

4. Luftreiniger nach einem der vorhergehenden Ansprüche, **dadurch gekennzeichnet, dass** der Körper (1) eine tragbare Struktur verwendet.

5. Luftreiniger nach einem der vorhergehenden Ansprüchen, **dadurch gekennzeichnet, dass** bei ihm die CO₂ -Konzentration zur gleichen Zeit gemessen werden kann wie die Luft durch das Gebläse (2) umgewälzt und durch die elektrostatische Absorptionsvorrichtung gereinigt wird (3), um eine genauere Messung der CO₂ -Konzentration zu erhalten.

## Revendications

1. Purificateur d'air comprenant :
a) un corps (1) ayant une entrée d'air (6) et une sortie d'air (7);
b) un ventilateur (2);
c) un boîtier de commande électrique (5);
d) un dispositif d'absorption électrostatique (3);
dans lequel :
le ventilateur (2) est disposé dans la sortie d'air (7) et le dispositif d'absorption électrostatique est disposé dans l'entrée d'air (6);
**caractérisé en ce que**
le purificateur d'air comprend en outre un détecteur de CO₂ et le détecteur de CO₂ (4) est disposé dans la sortie d'air (7).

2. Purificateur d'air selon l'une quelconque des revendications précédentes, **caractérisé en ce que** le détecteur de CO₂ (4) est connecté au boîtier de commande électrique (5).

3. Purificateur d'air selon l'une quelconque des revendications précédentes, **caractérisé en ce que** le dispositif d'absorption électrostatique (3) comprend une pluralité de fils de ionisation à haute tension et de plaques collectrices de poussière disposés en alternance.

4. Purificateur d'air selon l'une quelconque des revendications précédentes, **caractérisé en ce que** le corps (1) emploie une structure portable.

5. Purificateur d'air selon l'une quelconque des revendications précédentes, **caractérisé en ce qu'**il permet de mesurer la concentration en CO₂ en même temps que l'air est mis en circulation par le ventilateur (2) et est purifié par le dispositif d'absorption électrostatique (3) de manière à obtenir une lecture plus précise de la concentration en CO₂.
